# EUROPEAN PATENT SPECIFICATION

(11) **EP 4 450 432 B1**
(45) Date of publication and mention of the grant of the patent: **16.04.2025**
(21) Application number: 24170640.7
(22) Date of filing: 16.04.2024
(51) Int. Cl.: B65G 54/02, B61B 1/00, B65G 41/00

(54) **APPARATUS FOR PERFORMING A PROCESSING OPERATION ON OBJECTS**
VORRICHTUNG ZUR DURCHFÜHRUNG EINER BEARBEITUNGSOPERATION AN GEGENSTÄNDEN
APPAREIL POUR EFFECTUER UNE OPÉRATION DE TRAITEMENT SUR DES OBJETS

(30) Priority: 21.04.2023 IT 202300007902
(43) Date of publication of application: 23.10.2024
(73) Proprietor: G. Mondini SpA, 25033 Cologne (BS) (IT)
(72) Inventor: MONDINI, Paolo Carlo, 25033 Cologne BS (IT); SURACE, Alfonso, 25038 Rovato BS (IT); BIGNOTTI, Vanni, 24060 Castelli Calepio BG (IT)
(74) Representative: Ponchiroli, Simone

(56) References cited:
- CN-U- 211 196 766
- US-A1- 2022 161 956
- US-B2- 9 856 096

## Description

This invention relates to an apparatus for performing a processing operation on objects.

One feature of conveying devices with a linear or planar motor, is that of having a sliding path on which the carriages driven by the linear or planar motor slide. Moreover, in accordance with the most widespread prior art, conveying devices of this type are usually made using a plurality of active modules, each of which defines a portion of the sliding path and a stretch of the linear or planar motor, which are mounted one after another so that together they define the whole sliding path. Each module is connected to an electronic processing control unit which, when appropriately programmed, controls the various modules in a coordinated way and produces the overall operation of the conveying device (all of this also applies to this invention).

The most critical aspect of this type of conveying devices is the need to install each module in such a way that each stretch of the sliding path is extremely precisely aligned with the stretches which precede and follow it (usually it is necessary to work with precision to hundredths of a millimetre), in order to prevent the formation of steps which could hinder the movement of the carriages.

In accordance with prior art solutions, to successfully achieve this result, it is necessary both for the conveying device to have a supporting structure which is perfectly stable relative to the floor on which it is installed, and for each active module to be mounted in such a way that it is independently adjustable on the supporting structure.

This prior art works very well for installation of simple conveying devices suitable for shifting the objects between two stations, but has some disadvantages when it is necessary to perform a processing operation on the objects while the objects themselves are positioned on the movable carriages of the conveying device with linear or planar motor.

In particular, problems appear where the processing unit which must perform the processing operation has a lower base, constituted of the portion of supporting structure which is below the conveying device at the processing station and which supports it, and an upper operating part, mounted on the base, which in contrast is above the conveying device.

Indeed for good operation of the conveying device it is necessary to guarantee constant alignment over time between the portions of sliding path defined by the adjacent active modules.

This requirement is difficult to satisfy with many processing apparatuses, in particular those which perform mechanically demanding processing operations and which inevitably generate vibrations which propagate in the base. These apparatuses doubtless include many apparatuses used in packaging lines, such as apparatuses intended to three-dimensionally form trays made of paperboard or similar material which are initially flat, apparatuses intended to thermoform a coating layer on a tray made of paperboard or a similar material, apparatuses intended to load products in a tray or in a container, and sealing apparatuses (for sealing in a free atmosphere, in a vacuum, in a modified atmosphere, etc.).

In all of these cases, the conveying device is in fact continuously subjected to significant vibrations and mechanical deformations which may cause misalignment between the various modules with the need for constant checking and adjusting activity by operators, activity which also requires considerable downtime during plant operation.

Since in many cases the manufacturer of the apparatuses which perform the processing operations is different from the manufacturer of the conveying device, a further problem of prior art plants is the need to modify the processing unit or the conveying device in such a way as to make the base of the processing unit coincide with the supporting structure of the conveying device at the processing station.

However, that also brings difficulties during machine installation, since it is necessary to act on that same structure both to adjust the sliding path in the best possible way, and to adjust operation of the processing unit.

In this context the technical purpose which forms the basis of this invention is to provide an apparatus for performing a processing operation on objects which comprises a conveying device with linear or planar motor, which overcomes the above-mentioned disadvantages.

In particular the technical purpose of this invention is to provide an apparatus for performing a processing operation on objects, of the type indicated above, wherein the processing operations performed on the objects have less effect on the active modules of the conveying device than occurs in prior art plants. Furthermore the technical purpose of this invention is to provide an apparatus for performing a processing operation on objects, of the type indicated above, wherein there is less need for checks of the positioning of the active modules relative to each other than is necessary in prior art plants.

US2022161956A1 discloses an apparatus for performing a processing operation according to the preamble of claim 1.

Another technical purpose of this invention is to provide an apparatus for performing a processing operation on objects, of the type indicated above, wherein coupling the processing unit and the conveying device with linear or planar motor to each other is simpler.

The technical purpose specified and the aims indicated are substantially achieved by an apparatus for performing a processing operation on objects, as defined in independent claim 1. Particular embodiments of this invention are defined in the corresponding dependent claims.

Further features and the advantages of this invention will be more apparent from the detailed description of several preferred, non-limiting embodiments of an apparatus for performing a processing operation on objects, illustrated in the accompanying drawings, in which:

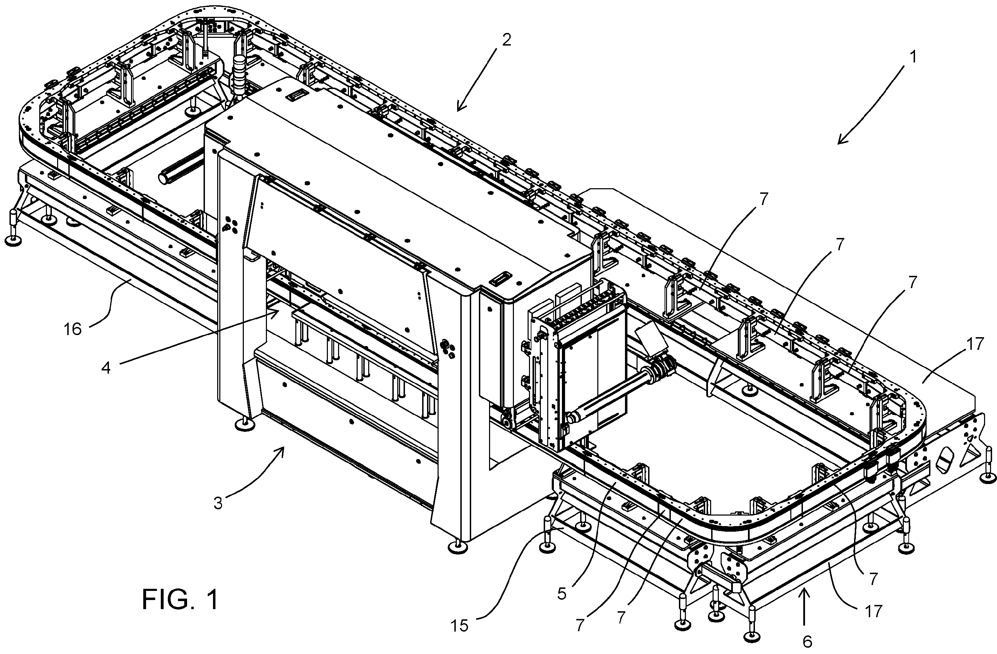

- Figure 1 is an axonometric view of an example of an apparatus made in accordance with this invention with some parts cut away to better illustrate others (in particular without carriages);

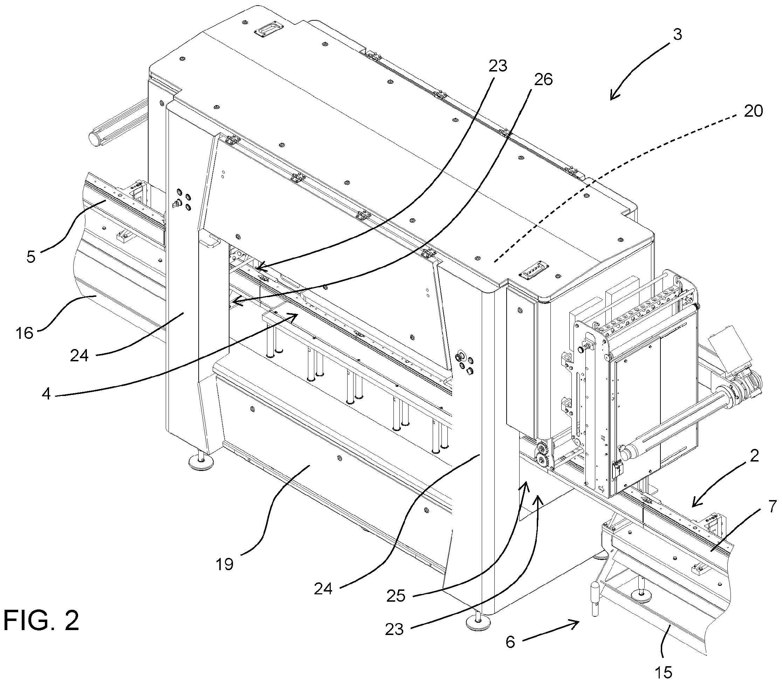

- Figure 2 is an enlarged view of a part of the apparatus of Figure 1, in which a processing unit for processing objects is present;

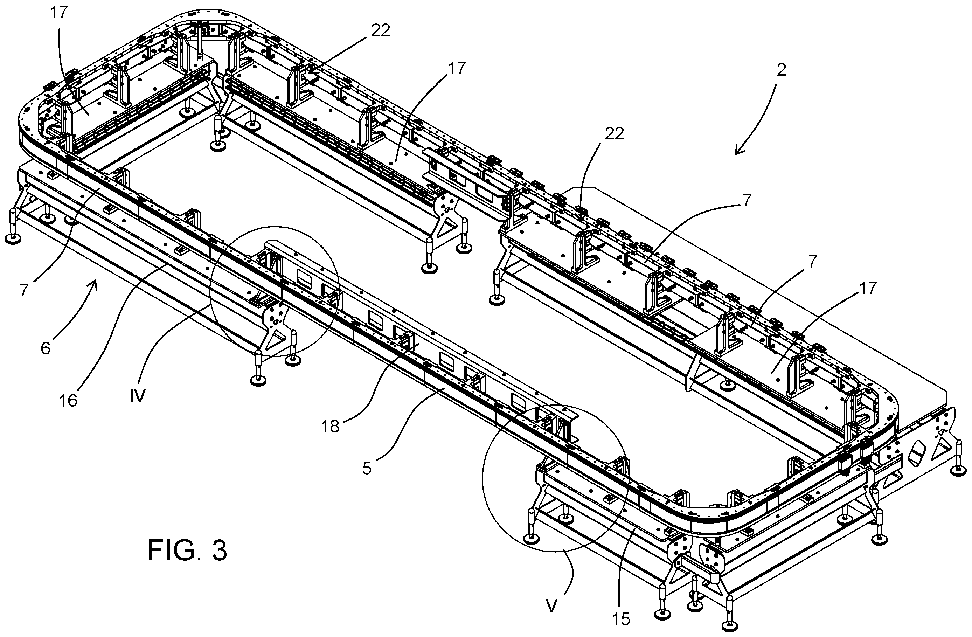

- Figure 3 shows the apparatus of Figure 1 without the processing unit;

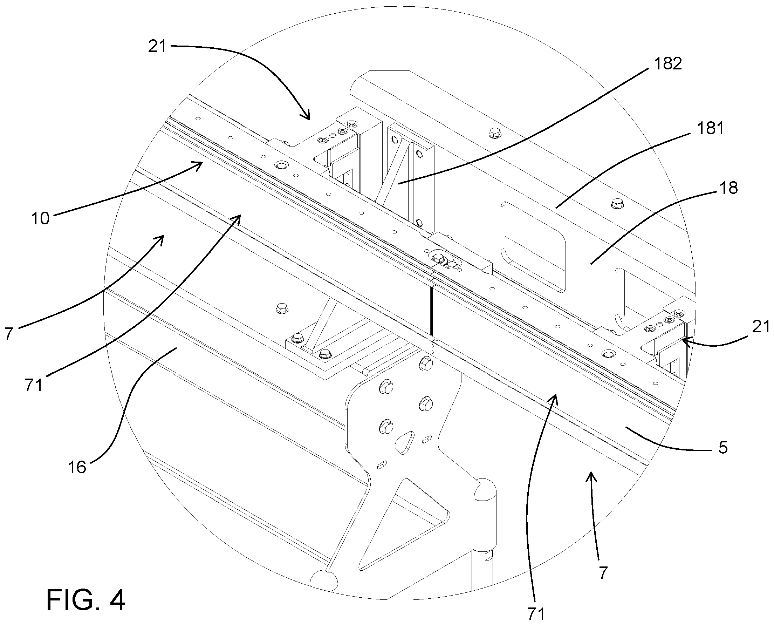

- Figure 4 is an enlarged view of the detail IV of Figure 3;

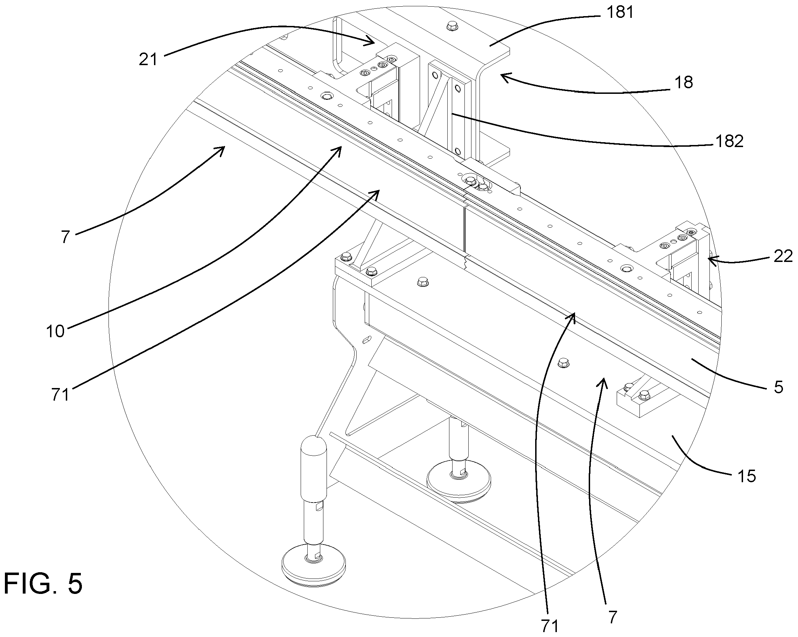

- Figure 5 is an enlarged view of the detail V of Figure 3;

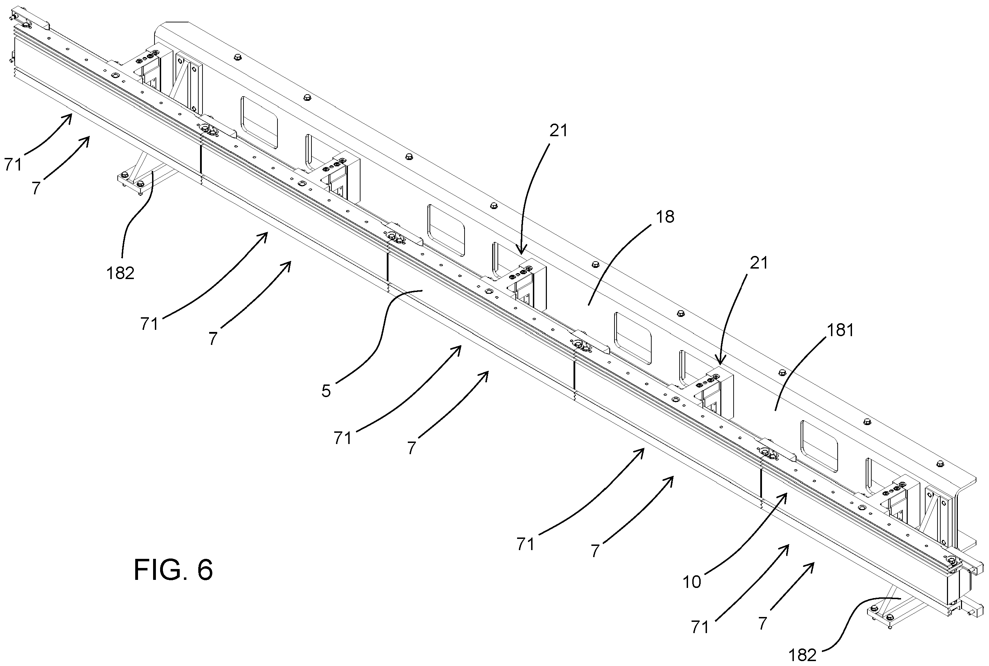

- Figure 6 is an enlarged view of only a supporting body of the processing unit visible in Figure 3;
- Figure 7 is an axonometric view of an example of a carriage associable in use with the part of the apparatus visible in Figure 2; and
- Figure 8 is a front view of the carriage of Figure 7.

With reference to the above-mentioned figures the reference number 1 denotes in its entirety an apparatus for performing a processing operation on objects which is made in accordance with this invention. In the embodiment illustrated in the accompanying figures, the apparatus 1 is an apparatus for sealing with an upper film a tray in which a product is present. Indeed, in general, this invention is advantageously applied in the case in which the object comprises a container or a tray and in which the processing operation is a step of a process for packaging of a product in the container or on the tray.

However, the type of processing operation performed by the apparatus 1 is not binding for this invention and may be of any type. In the accompanying figures the objects to be processed are not illustrated.

The apparatus 1 comprises at least one conveyor 2 and at least one processing unit 3 associated with the conveyor 2 at a processing station 4. The processing unit 3 is configured to perform the required processing operation on the objects.

The conveyor 2 defines a forward movement path for the objects to be processed, along which the processing station 4 is located. Depending on the embodiments, the forward movement path may be a closed path, as in the accompanying figures, or an open path. Although not illustrated in the accompanying figures, along the forward movement path there may also be (again if the forward movement path is a closed path) a loading station for loading the objects and an unloading station for unloading the objects. Moreover, there may even be further processing stations present and corresponding further processing units 3.

In accordance with this invention, the conveyor 2 is alternatively either a conveying device with linear motor or a conveying device with planar motor. In all cases, the conveyor 2 defines a sliding path 5 which extends along a trajectory of extension.

In more detail, the conveyor 2 comprises a supporting structure 6, a plurality of active modules 7 and a plurality of carriages 8.

The supporting structure 6 is the part of the conveyor 2 which rests on the ground and on which the active modules 7 are mounted.

The active modules 7 are also positioned one after another along a trajectory of extension parallel to the forward movement path. Each active module 7 defines a stretch of the sliding path 5 and a part respectively of the linear motor or of the planar motor. In the known way, the electromagnetic coils which are part of the linear or planar motor are in fact installed below the stretch of sliding path 5 defined by each active module 7. The active modules 7 may have various shapes and dimensions; moreover, advantageously, in each apparatus 1 different types of active modules 7 may be present.

For example, in the embodiment illustrated in the accompanying figures, the conveyor 2 comprises a conveying device with linear motor which extends along an annular trajectory of extension which lies in a horizontal plane, whilst the sliding path 5 is constituted of a surface which is also annular but which is perpendicular to the horizontal plane. The trajectory of extension extends substantially in a rectangle with rounded corners. In that embodiment there are different types of active modules 7 present, in particular active modules 7 which extend straight positioned along the straight stretches of the trajectory of extension and active modules 7 which extend in a curved shape positioned at the rounded corners of the trajectory of extension. For each type there are also active modules 7 with different lengths present along the trajectory of extension.

However, in general, the development of the trajectory of extension, the shape, the size and the number of active modules 7 may vary according to requirements.

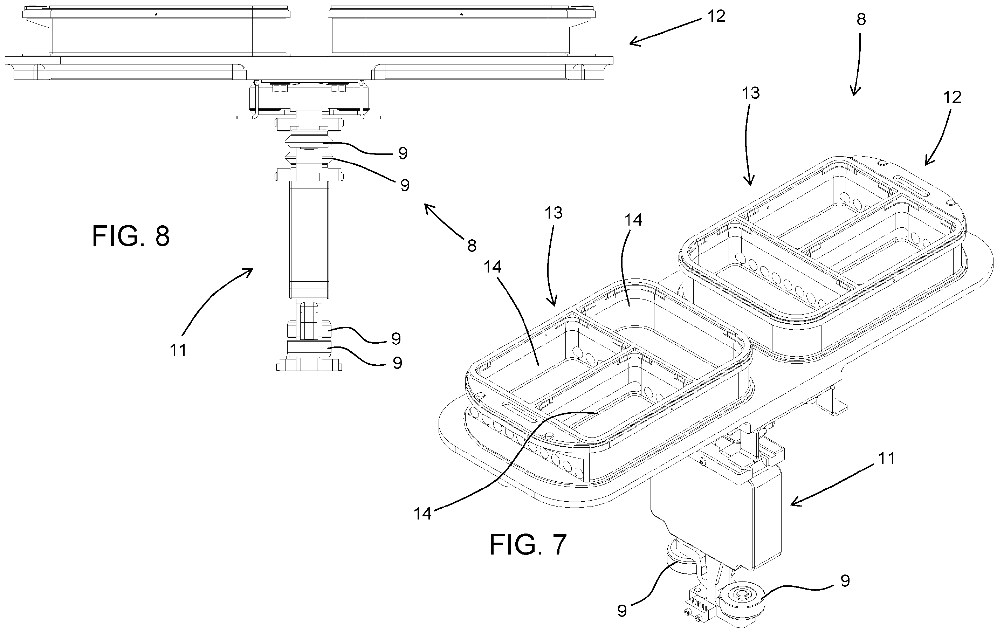

The carriages 8 are slidably associated with the active modules 7 at the sliding path 5, and are configured to be moved along the sliding path 5 by the motor of the conveying device (linear or planar depending on the embodiments). In some embodiments, in particular those in which the conveying device has a linear motor such as that illustrated in Figure 7 and 8, the carriages 8 may be equipped with idle rollers 9 configured to be inserted into suitable sliding grooves 10, which are defined by the conveying device and which extend parallel to the sliding path 5 (preferably above and below it). In other embodiments, in particular those in which the conveying device has a planar motor, the carriages 8 in contrast may be associated with the sliding path 5 without contact (magnetic levitation).

In the preferred embodiments, in each carriage 8 it may be possible to identify a movement body 11 which is coupled to the sliding path 5 (and in which the magnetic/electromagnetic elements suitable for interacting with the linear or planar motor are installed), and a supporting element 12 which is mounted on the movement body 11 and is configured to support, in use, one or more objects to be processed. In the embodiment illustrated in the accompanying figures, when the carriage 8 is mounted on the sliding path 5, the movement body 11 extends mainly vertically, whilst the supporting element 12 extends mainly horizontally and is intended to support two trays, each of which has three compartments. Similarly, the supporting element 12 has two seats 13 for the trays, in each of which three housings 14 can be identified, one for each compartment of the tray (Figure 7).

The supporting structure 6 comprises at least one first base 15 and one second base 16 which rest directly on the ground, the first base 15 and the second base 16 being positioned at opposite sides of the processing unit 3 relative to the processing station 4. With reference to the forward movement path for the objects, the first base 15 and the second base 16 are positioned one upstream and one downstream relative to the processing unit 3.

In some embodiments, at least in the zones in which there is no processing unit 3 present, the supporting structure 6 may comprise a plurality of bases 15, 16, 17 which rest directly on the ground. One or more of said active modules 7 may be installed on each base, including the first base 15 and the second base 16. In the embodiment illustrated in the accompanying figures, the supporting structure 6 as a whole comprises six bases 15, 16, 17.

According to an innovative aspect of this invention, the supporting structure 6 also comprises a supporting body 18 which is mounted like a bridge between the first base 15 and the second base 16. That supporting body 18 therefore rests on the ground exclusively by means of the two bases 15, 16, 17 to which it is fixed. Furthermore, according to the innovative aspect of this invention, two or more of the active modules 7 are mounted on the supporting body 18. Hereinafter, to distinguish them from the others, the active modules 7 mounted on the supporting body 18 will be defined the first active modules 71.

In some embodiments the supporting body 18 comprises a shaped metal beam 181 and two connecting brackets 182 connected to the ends of the beam.

The first active modules 71 are adjacent to each other and together define a continuous stretch of the sliding path 5 which, when travelled along by a carriage 8, causes the object to pass through the processing station 4. At least one of the first active modules 71 therefore defines the sliding path 5 at the processing station 4.

The processing unit 3 comprises a lower base 19 and an upper operating part 20 which is mechanically connected to the lower base 19. The operating part 20 is also positioned vertically above the lower base 19 but is spaced apart from it, in such a way that the processing station 4 is positioned between the lower base 19 and the operating part 20. In contrast, the lower base 19 is interposed between the first base 15 and the second base 16.

The operating part 20 is configured to perform, in use, the processing operation on the object supported by the supporting element 12, when the carriage 8 is in the processing station 4.

In some embodiments, such as that illustrated in the accompanying figures, even the supporting body 18 and/or only the first active modules 71 are at least partly positioned between the lower base 19 and the operating part 20, like the carriages 8 when they are at the stretch of sliding path 5 defined by those first active modules 71.

Advantageously, in accordance with the preferred embodiment of this invention, the processing unit 3 and the supporting structure 6 of the conveyor 2 are mechanically separate and independent.

Advantageously, each of the first active modules 71 is fixed to the supporting body 18 by means of a first adjusting element 21 which allows an adjustment of the position and/or of the orientation of the first active module 7 relative to the supporting body 18, which is independent of that of the other active modules 7. Similarly, advantageously each active module 7 other than the first active modules 71, is mounted on the supporting structure 6 by means of a second adjusting element 22 which allows an adjustment of the position and/or of the orientation of the active module 7, which is independent of that of the other active modules 7. Advantageously the second adjusting elements 22 may be similar to the first adjusting elements 21.

That allows adjustment of the position and/or the orientation of all of the active modules 7 in such a way that the stretch of sliding path 5 defined by each of them is aligned, with the required tolerances, relative to the stretches of sliding path 5 defined by the other active modules 7 adjacent to it.

Preferably, once the position and/or the orientation of two adjacent active modules 7 have been adjusted in the desired way, those active modules 7 can be connected to each other by means of suitable connecting elements 22 which are in themselves known.

In accordance with a particularly preferred embodiment, the supporting body 18 is removably mounted on the first base 15 and on the second base 16 (for example using removable screws and/or bolts) and therefore can be removed from the first base 15 and from the second base 16, and remounted on them, together with all of the first active modules 71 mounted on it, keeping unchanged the position of the first modules 71 relative to the supporting body 18 (and therefore the position of the first active modules 71 relative to each other). That is particularly advantageous during apparatus 1 installation, maintenance or size change-over, since it allows free intervention on the processing unit 3 without the first active modules 71 being able to cause a hindrance in any way and without risking losing their adjustment relative to each other.

In some embodiments, the supporting body 18, when it is mounted like a bridge between the first base 15 and the second base 16, is inserted passing through at least one empty space 23 completely surrounded by the processing unit 3. That applies, for example, in the case illustrated in the accompanying figures wherein the operating part 20 is supported by four columns 24 which extend upwards starting from the four corners of the lower base 19 (two are hidden in the accompanying figures), and wherein the columns 24, in pairs, together with the lower base 19 and with the operating part 20, delimit a first window 25 directed towards the first base 15 and a second window 26 directed towards the second base 16.

In some embodiments, the lower base 19 comprises at least one contact body 25 positioned at least at the processing station 4, which is configured to support the supporting element 12 at the bottom at least when, in use, the operating part 20 performs the required processing operation. The contact body 25 may be movable, so as to couple to the lower part of the supporting element 12 when the carriage 8 is in the processing station 4, or may be fixed; in this latter case it may in contrast be the case that the supporting element 12 slides on the contact body 25 when the carriage 8 moves into and out of the processing station 4. Advantageously, the lower base 19 comprises two contact bodies 25 positioned on the two sides of the forward movement path to support the supporting element 12 on both sides.

In some embodiments, the supporting element 12 is mounted with play on the movement body 11 and the supporting element 12 is movable relative to the movement body 11 so that it can rest on the contact body 25 at least when the carriage 8 is at the processing station 4 (for example between the two there may be springs which allow a limited movement of the supporting element 12 relative to the movement body 11).

During use, operation of the apparatus 1 disclosed is similar to that of prior art plants, the only fundamental difference being that the first active modules 71 present at the processing station 4 are not mounted on the processing unit 3 and therefore are hardly affected, if at all, by the mechanical stresses generated by it.

This invention therefore brings important advantages.

Firstly, thanks to this invention it was possible to provide an apparatus for performing a processing operation on objects with a conveying device with linear or planar motor, wherein the processing operations performed on the objects have much less effect on the active modules of the conveying device than occurs in prior art plants.

Secondly, thanks to this invention it was possible to provide an apparatus for performing a processing operation on objects with a conveying device with linear or planar motor, wherein there is less need for periodic checks of the positioning of the active modules relative to each other than is necessary in prior art plants.

Not least, thanks to this invention it was possible to provide an apparatus in which installation, maintenance and size change-over operations at the processing unit are simpler than is the case in prior art apparatuses.

Finally, it should be noticed that this invention is relatively easy to produce and that even the cost linked to implementing the invention is not very high.

The invention described above may be modified and adapted in several ways without thereby departing from the invention as defined in the appended claims.

All details may be substituted with other technically equivalent elements and the materials used, as well as the shapes and dimensions of the various components, may vary according to requirements without departing from the invention as defined in the appended claims.

## Claims

1. An apparatus for performing a processing operation on objects, comprising a conveyor (2), which defines a forward movement path for the objects to be processed along which a processing station (4) is located, and a processing unit (3) associated with the conveyor (2) at the processing station (4) and configured to perform said processing operation, wherein:
the conveyor (2) is a conveying device respectively with linear motor or with planar motor, and defines a sliding path (5) which extends along a trajectory of extension parallel to the forward movement path;
the conveyor (2) comprises a supporting structure (6), a plurality of active modules (7) mounted on the supporting structure (6) and positioned one after another along the trajectory of extension, and a plurality of carriages (8) slidably associated with the active modules (7) and with the sliding path (5) and configured to be moved along the sliding path (5) respectively by the linear motor or by the planar motor;
each active module (7) defines a stretch of the sliding path (5) and a part respectively of the linear motor or of the planar motor;
each carriage (8) has a movement body (11) coupled to the sliding path (5) and a supporting element (12) mounted on the movement body (11) and configured to support, in use, an object to be processed;
the processing unit (3) comprises a lower base (19) and an upper operating part (20);
the operating part (20) is mechanically connected to the lower base (19), is positioned vertically above the lower base (19) and is spaced apart from the lower base (19);
the operating part (20) is configured to perform, in use, the processing operation on the object supported by the supporting element (12), when the carriage (8) is in the processing station (4); and
the supporting structure (6) comprises a first base (15) and a second base (16) which rest directly on the ground;
**characterized in that**:
the first base (15) and the second base (16) are positioned at opposite sides of the processing unit (3) relative to the processing station (4);
the processing station (4) is positioned between the lower base (19) and the operating part (20);
the supporting structure (6) also comprises a supporting body (18) mounted like a bridge between the first base (15) and the second base (16); and
mounted on the supporting body (18) there are two or more adjacent first active modules (71) part of said plurality of active modules (7), at least one of the first active modules (71) defining the sliding path (5) at the processing station (4).

2. The apparatus according to claim 1, wherein the processing unit (3) and the supporting structure (6) of the conveyor (2) are mechanically separate and independent.

3. The apparatus according to claim 1 or 2 wherein the supporting body (18) is removably mounted on the first base (15) and on the second base (16) and can be removed from the first base (15) and from the second base (16) and remounted on them together with the first active modules (71), keeping the position of the first active modules (71) relative to the supporting body (18) unchanged.

4. The apparatus according to any one of claims 1 to 3 wherein the supporting body (18), when it is mounted like a bridge between the first base (15) and the second base (16), is inserted passing through at least one empty space (23) completely surrounded by the processing unit (3).

5. The apparatus according to any one of claims 1 to 4 wherein the lower base (19) comprises at least one contact body (25) positioned at the processing station (4) and configured to support the supporting element (12) at the bottom at least when, in use, the operating part (20) performs said processing operation.

6. The apparatus according to claim 5 wherein the supporting element (12) is mounted with play on the movement body (11), and wherein when the carriage (8) is at the processing station (4) the supporting element (12) is movable relative to the movement body (11) in order to be able to rest on the contact body (25).

7. The apparatus according to any one of claims 1 to 6 wherein each of said first active modules (71) is fixed to the supporting body (18) by means of a first adjusting element (21) which allows an adjustment of the position and/or of the orientation of the first active module (7) relative to the supporting body (18) independent of that of the other active modules (7).

8. The apparatus according to any of claims 1 to 7 wherein each active module (7), other than the first active modules (71), is mounted on the supporting structure (6) by means of a second adjusting element (22) which allows an adjustment of the position and/or of the orientation of the active module (7) independent of that of the other active modules (7).

9. The apparatus according to any one of claims 1 to 8 wherein the object comprises a container or a tray and wherein the processing operation is a step of a process for packaging a product in the container or on the tray.

## Patentansprüche

1. Eine Vorrichtung zur Durchführung eines Bearbeitungsvorgangs an Gegenständen, einen Förderer (2), der einen Vorwärtsbewegungsweg für die zu bearbeitenden Gegenstände definiert, auf dem sich eine Bearbeitungsstation (4) befindet, und eine Bearbeitungseinheit (3), die an der Bearbeitungsstation (4) mit dem Förderer (2) verknüpft und dazu ausgelegt ist, besagten Bearbeitungsvorgang durchzuführen, beinhaltend, wobei:
der Förderer (2) eine Fördervorrichtung mit einem Linearmotor beziehungsweise einem Planarmotor ist und einen Gleitweg (5) definiert, der sich auf einem Erstreckungsverlauf parallel zum Vorwärtsbewegungsweg erstreckt;
der Förderer (2) eine Trägerstruktur (6), eine Mehrzahl aktiver Module (7), die an der Trägerstruktur (6) montiert und eines nach dem anderen den Erstreckungsverlauf entlang montiert sind, und eine Mehrzahl von Laufwagen (8), die gleitend mit den aktiven Modulen (7) und mit dem Gleitweg (5) verbunden und dazu ausgelegt sind, vom Linearmotor beziehungsweise vom Planarmotor auf dem Gleitweg (5) bewegt zu werden, beinhaltet;
jedes aktive Modul (7) einen Streckenabschnitt des Gleitwegs (5) und einen Teil des Linearmotors beziehungsweise des Planarmotors definiert;
jeder Laufwagen (8) einen Bewegungskörper (11), der mit dem Gleitweg (5) gekoppelt ist, und ein Trägerelement (12), das am Bewegungskörper (11) montiert und dazu ausgelegt ist, im Gebrauch einen zu bearbeitenden Gegenstand zu tragen, hat;
die Bearbeitungseinheit (3) eine untere Basis (19) und einen oberen operativen Teil (20) beinhaltet;
der operative Teil (20) mechanisch mit der unteren Basis (19) verbunden ist, vertikal über der unteren Basis (19) positioniert ist und sich in einem Abstand von der unteren Basis (19) befindet;
der operative Teil (20) dazu ausgelegt ist, im Gebrauch den Bearbeitungsvorgang an dem Gegenstand, der vom Trägerelement (12) getragen wird, durchzuführen, wenn der Laufwagen (8) in der Bearbeitungsstation (4) ist; und
die Trägerstruktur (6) eine erste Basis (15) und eine zweite Basis (16), die direkt auf dem Boden stehen, beinhaltet;
**gekennzeichnet dadurch, dass**:
die erste Basis (15) und die zweite Basis (16) an gegenüberliegenden Seiten der Bearbeitungseinheit (3) im Verhältnis zur Bearbeitungsstation (4) positioniert sind;
die Bearbeitungsstation (4) zwischen der unteren Basis (19) und dem operativen Teil (20) positioniert ist;
die Trägerstruktur (6) außerdem einen Trägerkörper (18), der wie eine Brücke zwischen der ersten Basis (15) und der zweiten Basis (16) montiert ist, beinhaltet; und
am Trägerkörper (18) montiert zwei oder mehr nebeneinander liegende erste aktive Module (71) vorhanden sind, die Teil besagter Mehrzahl aktiver Module (7) sind, dabei definiert mindestens eines der ersten aktiven Module (71) den Gleitweg (5) an der Bearbeitungsstation (4).

2. Die Vorrichtung nach dem Patentanspruch 1, wobei die Bearbeitungseinheit (3) und die Trägerstruktur (6) des Förderers (2) mechanisch getrennt und unabhängig sind.

3. Die Vorrichtung nach dem Patentanspruch 1 oder 2, wobei der Trägerkörper (18) abnehmbar an der ersten Basis (15) und an der zweiten Basis (16) montiert ist und von der ersten Basis (15) und von der zweiten Basis (16) entfernt werden und zusammen mit den ersten aktiven Modulen (71) wieder an ihnen montiert werden kann, wobei die Position der ersten aktiven Module (71) im Verhältnis zum Trägerkörper (18) unverändert bleibt.

4. Die Vorrichtung nach jedem der Patentansprüche 1 bis 3, wobei der Trägerkörper (18), wenn er wie eine Brücke zwischen der ersten Basis (15) und der zweiten Basis (16) montiert ist, mindestens einen Freiraum (23) passierend, komplett von der Bearbeitungsstation (3) umgeben, eingesetzt ist.

5. Die Vorrichtung nach jedem der Patentansprüche 1 bis 4, wobei die untere Basis (19) mindestens einen Kontaktkörper (25) beinhaltet, der an der Bearbeitungsstation (4) positioniert und dazu ausgelegt ist, das Trägerelement (12) am Boden zu stützen, zumindest dann, wenn der operative Teil (20) im Gebrauch besagten Bearbeitungsvorgang durchführt.

6. Die Vorrichtung nach dem Patentanspruch 5, wobei das Trägerelement (12) mit einem Spiel am Bewegungskörper (11) montiert ist, und wobei, wenn sich der Laufwagen (8) an der Bearbeitungsstation (4) befindet, das Trägerelement (12) im Verhältnis zum Bewegungskörper (11) beweglich ist, um dazu imstande zu sein, auf dem Kontaktkörper (25) aufzuliegen.

7. Die Vorrichtung nach jedem der Patentansprüche 1 bis 6, wobei jedes der besagten ersten aktiven Module (71) mithilfe eines ersten Anpassungselements (21) am Trägerkörper (18) befestigt ist, das eine Anpassung der Position und/oder der Ausrichtung des ersten aktiven Moduls (7) im Verhältnis zum Trägerkörper (18) unabhängig von derjenigen der übrigen aktiven Module (7) erlaubt.

8. Die Vorrichtung nach jedem der Patentansprüche 1 bis 7, wobei jedes aktive Modul (7), außer die ersten aktiven Module (71), mithilfe eines zweiten Anpassungselements (22) an der Trägerstruktur (6) montiert ist, das eine Anpassung der Position und/oder oder Ausrichtung des aktiven Moduls (7) unabhängig von derjenigen der übrigen aktiven Module (7) erlaubt.

9. Die Vorrichtung nach jedem der Patentansprüche 1 bis 8, wobei der Gegenstand einen Behälter oder ein Tray beinhaltet und wobei der Bearbeitungsvorgang ein Schritt eines Verfahrens zur Verpackung eines Produkts in dem Behälter oder auf dem Tray ist.

## Revendications

1. Un appareil pour effectuer une opération de traitement sur des objets, comprenant un convoyeur (2), qui définit un parcours d'avance pour les objets à traiter le long duquel se trouve une station de traitement (4), et une unité de traitement (3) associée au convoyeur (2) au niveau de la station de traitement (4) et configurée pour effectuer ladite opération de traitement, dans lequel :
le convoyeur (2) est un dispositif de transport respectivement à moteur linéaire ou à moteur planaire, et définit un parcours de coulissement (5) qui s'étend le long d'une trajectoire d'extension parallèle au parcours d'avance ;
le convoyeur (2) comprend une structure de support (6), une pluralité de modules actifs (7) montés sur la structure de support (6) et positionnés les uns après les autres le long de la trajectoire d'extension, et une pluralité de chariots (8) associés de façon coulissante avec les modules actifs (7) et avec le parcours de coulissement (5) et configurés pour être déplacés le long du parcours de coulissement (5) respectivement par le moteur linéaire ou par le moteur planaire ;
chaque module actif (7) définit un tronçon du parcours de coulissement (5) et une partie respectivement du moteur linéaire ou du moteur planaire ;
chaque chariot (8) a un corps de déplacement (11) accouplé avec le parcours de coulissement (5) et un élément de support (12) monté sur le corps de déplacement (11) et configuré pour supporter, lors de l'utilisation, un objet à traiter ;
l'unité de traitement (3) comprend un bâti inférieur (19) et une partie opérationnelle (20) supérieure ;
la partie opérationnelle (20) est mécaniquement reliée au bâti inférieur (19), est positionnée verticalement au-dessus du bâti inférieur (19) et est espacée du bâti inférieur (19) ;
la partie opérationnelle (20) est configurée pour effectuer, lors de l'utilisation, l'opération de traitement sur l'objet supporté par l'élément de support (12), lorsque le chariot (8) se trouve dans la station de traitement (4) ; et
la structure de support (6) comprend une première base (15) et une deuxième base (16) qui reposent directement sur le sol ;
**caractérisé en ce que** :
la première base (15) et la deuxième base (16) sont positionnées au niveau de côtés opposés de l'unité de traitement (3) par rapport à la station de traitement (4) ;
la station de traitement (4) est positionnée entre le bâti inférieur (19) et la partie opérationnelle (20) ;
la structure de support (6) comprend également un corps de support (18) monté en pont entre la première base (15) et la deuxième base (16) ; et
montés sur le corps de support (18), il y a deux ou plus premiers modules actifs (71) adjacents faisant partie de ladite pluralité de modules actifs (7), au moins un des premiers modules actifs (71) définissant le parcours de coulissement (5) au niveau de la station de traitement (4).

2. L'appareil selon la revendication 1, dans lequel l'unité de traitement (3) et la structure de support (6) du convoyeur (2) sont mécaniquement séparées et indépendantes.

3. L'appareil selon la revendication 1 ou 2, dans lequel le corps de support (18) est monté de façon amovible sur la première base (15) et sur la deuxième base (16) et peut être déposé de la première base (15) et de la deuxième base (16) et remonté sur celles-ci conjointement avec les premiers modules actifs (71), en maintenant inchangée la position des premiers modules actifs (71) par rapport au corps de support (18).

4. L'appareil selon l'une quelconque des revendications de 1 à 3, dans lequel le corps de support (18), lorsqu'il est monté en pont entre la première base (15) et la deuxième base (16), est inséré en passant à travers au moins un espace vide (23) entièrement entouré par l'unité de traitement (3).

5. L'appareil selon l'une quelconque des revendications de 1 à 4, dans lequel le bâti inférieur (19) comprend au moins un corps de contact (25) positionné au niveau de la station de traitement (4) et configuré pour supporter l'élément de support (12) par le bas au moins quand, lors de l'utilisation, la partie opérationnelle (20) effectue ladite opération de traitement.

6. L'appareil selon la revendication 5, dans lequel l'élément de support (12) est monté avec un jeu sur le corps de déplacement (11), et dans lequel, lorsque le chariot (8) se trouve au niveau de la station de traitement (4), l'élément de support (12) est mobile par rapport au corps de déplacement (11) de manière à pouvoir s'appuyer sur le corps de contact (25).

7. L'appareil selon l'une quelconque des revendications de 1 à 6, dans lequel chacun desdits premiers modules actifs (71) est fixé au corps de support (18) au moyen d'un premier élément de réglage (21) qui permet un réglage de la position et/ou de l'orientation du premier module actif (7) par rapport au corps de support (18) indépendant de celui des autres modules actifs (7).

8. L'appareil selon l'une quelconque des revendications de 1 à 7, dans lequel chaque module actif (7), autre que les premiers modules actifs (71), est monté sur la structure de support (6) au moyen d'un deuxième élément de réglage (22) qui permet un réglage de la position et/ou de l'orientation du module actif (7) indépendant de celui des autres modules actifs (7).

9. L'appareil selon l'une quelconque des revendications de 1 à 8, dans lequel l'objet comprend un récipient ou un plateau et dans lequel l'opération de traitement est une étape d'un processus d'emballage d'un produit dans le récipient ou sur le plateau.
